# EUROPEAN PATENT SPECIFICATION

(11) **EP 2 649 352 B1**
(45) Date of publication and mention of the grant of the patent: **04.03.2015**
(21) Application number: 11791008.3
(22) Date of filing: 06.12.2011
(51) Int. Cl.: F16K 17/04, F16K 31/36, F16K 31/56

(54) **AN ACTUATOR FOR OPERATING A VALVE IN A FLUID LINE**
VENTILBETÄTIGUNGSANTRIEB FÜR EINE FLUIDLEITUNG
ACTIONNEUR D'ENTRAÎNEMENT UNE SOUPAPE DANS UNE CONDUITE DE FLUIDE

(30) Priority: 06.12.2010 EP 10193798
(43) Date of publication of application: 16.10.2013
(73) Proprietor: Single Buoy Moorings Inc, 1723 Marly (CH)
(72) Inventor: BEDINI, Mauro, 18039 Ventimiglia (IM) (IT)
(74) Representative: Nederlandsch Octrooibureau
(86) International application number: PCT/EP2011/071971
(87) International publication number: WO 2012/076550

(56) References cited:
- GB-A- 1 096 003
- US-A- 2 587 358
- US-A- 2 694 408
- US-A- 3 602 249

## Description

### Field of the invention

The invention relates to an actuator for operating a valve in a fluid line comprising an actuating member with an actuating element for transferring a force to the device. The actuator according to the invention is specifically adapted for actuation of a valve in a surge pressure relief system.

### Background of the invention

Severe damage can result from pressure surges in a liquid transporting pipeline. Such surges may occur when there is a sudden change in velocity of the liquid in the pipeline. These sudden changes in the velocity may occur, for instance, when starting or stopping a pump which is used to pump the liquid through the pipeline. A pressure surge can also be created when a shut off valve needs to be suddenly closed.

It is known to limit the detrimental effect of surges in pipelines, by allowing a part of the liquid to escape from the pipeline when a surge occurs. In order to allow a certain volume of liquid to escape from the pipeline, the pipeline is connected via a valve with a surge relief line. In case the surge in the pipeline causes the pressure in the pipeline to exceed a certain threshold, the valve connecting the pipeline and the surge relief line is adapted to allow a certain volume of liquid to enter the surge relief line in order to prevent the pipeline from any damage.

In practice the surge relief line is connected to an overflow container, for instance in the form of a surge relief bag, which is used to collect any liquid which leaves the pipeline via the surge relief line.

In order to prevent equipment damage or danger, it is important that the time needed to operate the valve between the pipeline and the surge relief line is very short. Typically the required opening time for the valve is a couple of seconds. This relatively short opening time allows a volume of liquid to flow out of the pipeline and to decrease the potential danger of the pressure spike that travels through the pipeline. This time constraint creates a challenge when using electric valve actuators. While fluid powered linear actuators can typically actuate a valve in such time, electric actuators usually have much slower actuation times, due to the gearbox and rotary to linear converting mechanism, which sets up larger frictional and inertial forces in the transmission.

A valve to connect a pipeline with a surge relief line is known from the US 6,572,076. This document discloses a valve actuator comprising an electric motor that moves a valve stem. The device also comprises a spring which is kept in a compressed state and which serves as an additional safety device in order to ensure that the device is failsafe in the event of loss of electrical power.

According to US 6,572,076 the motor is used to compress to spring. The spring is locked in its compressed position by means of an electromagnet. The motor can be operated to open and close the valve in a controlled manner without compressing or releasing the spring. In case of loss of power, the electromagnet will be switched off, automatically releasing the spring and thus forcing the valve to a closed position.

A disadvantage of the known solution is the fact that the actuator for operating the valve needs to be connected to an electrical external source. Moreover the use of the actuator disclosed in US 6,572,076 is limited to a certain type of valve.

Document US 3602249 discloses another actuator for operating a valve.

The object of the invention is to provide an actuator for a valve which is self contained, locked open and locked closed, fail safe (spring loaded) and which does not need to be connected to any external source, like a hydraulic power unit or a source of electrical energy like a battery.
A further object is to provide an actuator which allows controlling the opening and/or closing time of a valve.

### Summary of the Invention

According to a first aspect of the invention, the invention relates to an actuator for operating a valve in a fluid line comprising an actuating member with an actuating element for transferring a force to the valve, wherein the actuating member is mounted to move between a first and a second position, a spring for storing energy and for moving the actuating member from a dead point to its second position by means of this energy in order to thereby move the actuating element, lock means for locking the actuating member in its first position, release means for releasing the actuating member in order to allow the actuating member to move from the first to the second position, the release means being pressure operated and adapted to be in contact with the fluid line and wherein the release means release the actuating member when the pressure in the fluid line exceeds a threshold, and wherein the actuating member is connected to a resistance element for controlling the maximum translation speed of the actuating member.

According to a preferred embodiment of the invention, the release means comprise a piston for receiving a fluid pressure on one end of the piston and for transferring said fluid pressure to the actuating member.

According to a preferred embodiment of the invention the resistance element comprises a piston which is movable in a damper cylinder between a first and a second position.

According to a preferred embodiment of the invention the actuator comprises a housing, wherein the housing is filled with oil.

According to a preferred embodiment of the invention the actuating member is adapted to make a quarter of a turn rotation between its first and its second position.

According to a second aspect of the invention, the invention relates to a pressure surge relief system for a liquid transporting pipeline, comprising a surge relief line with a first connection on one end for connecting the surge relief line to the pipeline and a second connection on the opposite end for connecting the surge relief line to a receptacle, the surge relief line being provided with a shot off valve and an actuator for operating the shut off valve, wherein the pressure relief system comprises an actuator according to the invention.

According to a further aspect of the invention the invention relates to a pipeline provided with a surge relief system according to the invention.

An advantage of the present invention is to have a valve actuator provided with a first transmission means that links the actuating member with a spring cylinder for energizing the spring and for maintaining the spring in its energized condition and a second transmission means that links the actuating member with a piston that will act on a closure time controller means for moving the valve element, the closure time controller means controlling the rotation speed of the actuating member.

An advantage of the present invention is to have an actuator to operate a device, like a valve, which is kept in a first, locked position, until the pressure in a pressure line or vessel exceeds a threshold value. Once this threshold value is exceeded, release means will be triggered which are adapted to release the lock in order to allow the actuating member of the actuator to move an actuating element from a first to a second position.

The movement of the actuating member from its first to its second position is ensured by the presence of a spring. This spring is positioned to initially provide a torque that opposes the rotation of the actuating member from its first to its second position. This means that the spring provides a certain counter force against the movement of the actuating member. This counterforce decreases during the rotation of the actuating member until it goes to zero corresponding to the dead point of the crankshaft kinematics in the actuator. Once the dead point has been surpassed the spring start to provide a torque in the direction of rotation of the actuating member, thus ensuring the proper movement of the actuating member from its first towards its second position.

According to the invention the actuating member is adapted for a quarter of a turn rotation.

### Brief description of the drawings

The invention will be better understood after the description that follows with reference to the accompanying drawings, wherein:
FIG. 1 shows an isometric arrangement of the actuator according to the invention;
FIG. 2 shows a cross section of the actuating mechanism of the actuator according to fig. 1;
FIG. 3 shows a floating fluid line provided with a surge relief bag;
FIG. 4 shows the floating line and the surge relief bag according to FIG. 3, wherein the surge relief bag is partially filled with fluid; and
FIG. 5 shows an alternative configuration of a floating line and a surge relief bag.

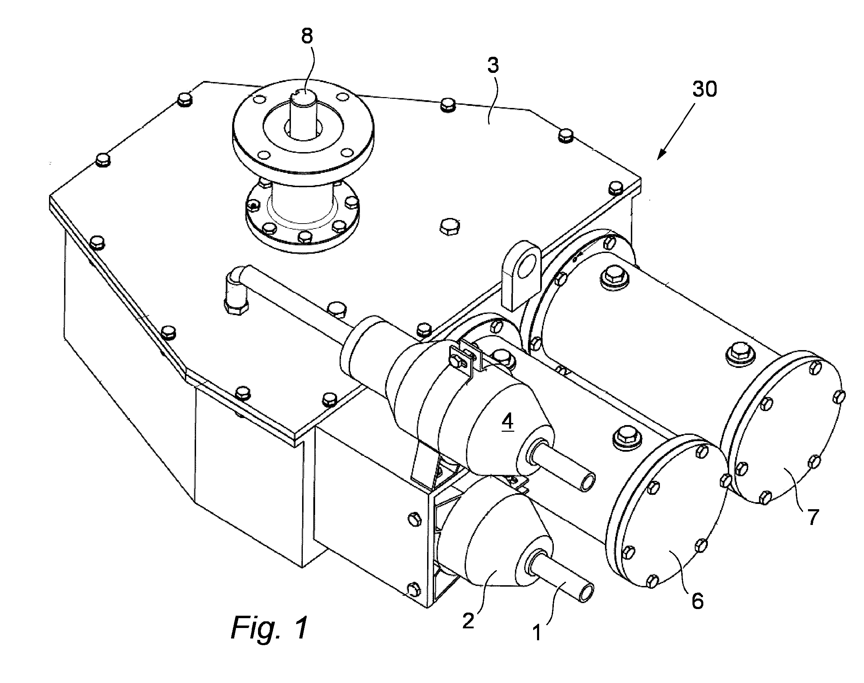

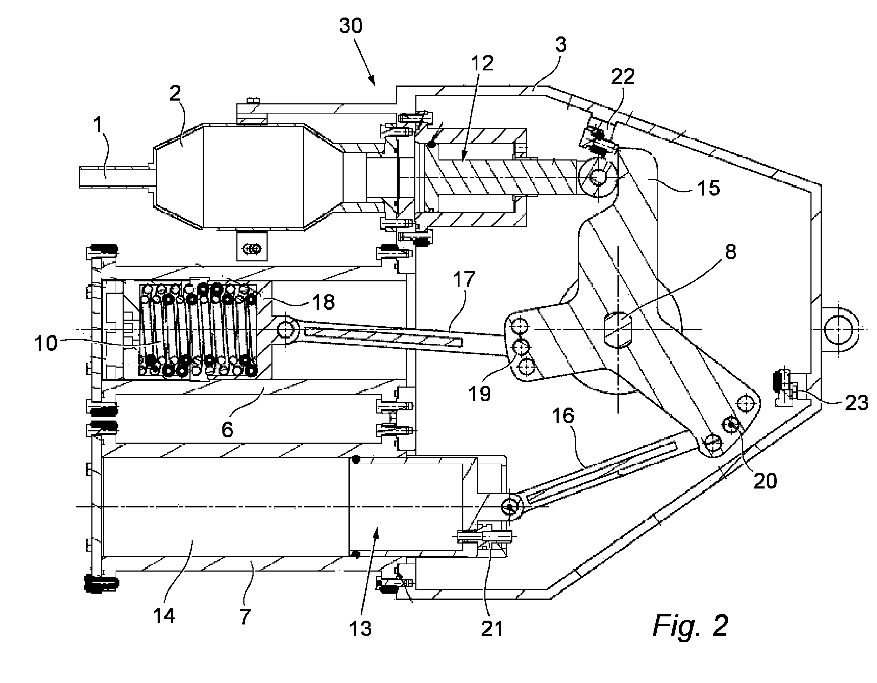

A possible embodiment of the actuator according to the present invention is shown in figs. 1 and 2. The actuator is adapted to be connected to a valve which is used to shut off a surge relief line. In practice a main pipeline can be connected via the surge relief line with a surge relief bag or other surge relief recipient. In case of a sudden increase in the fluid pressure within the main pipeline caused by a pressure surge, a certain volume of fluid can escape from the main pipeline via the surge relief line and this volume of fluid can be received in the surge relief bag in order to avoid that the fluid is discharged in the environment of the main pipeline.

In normal operation conditions the surge relief line will be shut off by a bursting disk, or a similar device, which is able to avoid fluid from entering the surge relief bag. The brake disk will open the surge relief line and will allow fluid to enter the surge relief valve once the pressure on the bursting disk exceeds a certain threshold value.

Besides the bursting disk, the surge relief line is also equipped with a valve to shut off the surge relief line once a certain volume of fluid has been allowed escape the main fluid line and to enter the surge relief bag. The actuator according to the present invention is specifically adapted to operate such a valve in a surge relief line.

FIG. 1 shows an isometric general arrangement of the actuator 30 according to the present invention. The actuator 30 comprises a main housing 3, from which a first and a second cylinder 6, 7 extend, an actuating element in the form of an axis 8 for actuating a valve, a line 1 for connecting the actuator 30 to a main fluid line, a segregation membrane inside a membrane container 2 and a temperature compensator 4.

The actuator 30 is used to operate a valve which is positioned in a surge relief line. The actuator 30 is adapted to keep the valve in the surge relief line in an open position and to move the valve from an open position to a closed position when the pressure in the surge relief line exceeds a certain maximum level. If the maximum pressure level is reached, the actuator 30 will react by turning the axis 8 from a first towards a second position. The axis 8 will thereby actuate the valve in the surge relief line and move the valve towards its closed position. The functioning of the actuating mechanism will be described in more detail with reference to Fig. 2

Normally, the actuator 30 will be positioned above the valve that needs to be actuated. That means that in use the axis 8 will be directed in a downward direction.

In FIG. 2, the actuator 30 is shown in cross section. FIG. 2 shows the interior of the housing 3 and the mechanical elements to make the axis 8 turn with respect to the housing 3.

The actuator 30 is pressure driven. The actuator 30 is connected to the fluid pressure in the surge relief line via line 1. The line 1 ends in a membrane housing 2, comprising a circuit segregation membrane to avoid fluid in the surge line, like crude oil from entering into the actuator housing 3. Next to the membrane housing 2 a volume or temperature compensator 4 is positioned (see FIG. 1). The compensator 4 is connected via line 41 with the interior of the housing 3. The compensator 4 is used to compensate for the additional amount of fluid present inside the actuator housing 3 when the actuator 30 is operated. The compensator 4 is also used to compensate for temperature and pressure fluctuations which are due to the direct environment wherein the actuator 30 is used. This is particularly important when the actuator 30 is used subsea.

The circuit segregation membrane 2 is connected to a drive means, in the form of a piston 12. The free end of the piston abuts actuating member 15. Actuating member 15 connected to the axis 8 and is rotatable with the axis 8 around a common rotational axis.

In fig. 2 the actuating member 15 is shown in a first position. The actuating member 15 is connected to two connecting rods 16, 17. The connecting rod 16 connects part of the actuating member 15 to a piston 13, which is received inside a cylinder 7. The connecting rod 17 connects the actuating member 15 to a piston head 18 which is movable inside a further cylinder 6 and which is in direct contact with a spring 10. The connections between the connecting rods 16, 17 and the actuating member 15 are obtained via crank shaft connections 19, 20.

According to FIG. 2 the spring 10 is compressed by the piston head 18. The spring force is transferred towards the actuating member 15 via the rod 17. The actuating member 15 is locked by the spring 10 and the rod 17 in its first position. This first position of the actuating member 15 corresponds with the first position of the valve in the surge relief line, which is the open position for the valve.

The fluid pressure in the line 1 is via the intermediate membrane housing 2 transferred toward the piston 12. The free end of the piston pushes against the actuating member 15, this force being dependent on the pressure level in the line 1.

In order to move the actuating member 15 from its first position towards its second position, the pressure inside the line 1 has to exceed a certain threshold value. If this threshold value is exceeded, the piston 12 urges the actuating member 15 in a clockwise direction. This means that at the same time the actuating member pushes against the rod 17 and the piston head 18 against the spring force of the spring 10.

The rotation of the actuating member 15 goes against the force of the spring 10 until the connection between the rod 17 and the piston head 18, the rod 17 and the rotational axis of the actuating member 15 are all in line (dead point). Once this point has been passed the spring 10 will urge the actuating member via the rod 17 in a clockwise position. That means that from that moment on the piston 12 and the rod 17 move the actuating member in the same direction.

The actuating member 15 is rotated from its first position towards its second position, which is determined by the contact notch 23. The rotation speed during this rotation is controlled by a resistance element for controlling the maximum translation speed of the actuating member 15. This resistance element has the form of a piston 13 which is movable within a damper cylinder 7. The piston 13 will allow a set maximum translation speed of the rod 16. Therefore the piston 13 will determine the time it will take the actuating member 15 to move towards its second position. That means that also the closing time of the valve connected to the actuator 30 is determined.

Since the actuator imposes a certain, set closing time for the valve, the user will be able to calculate the volume of fluid that has entered the surge relief bag between the moment of exceeding the threshold fluid pressure in the main fluid line and the complete closing of the valve in the surge relief line. The fact that the volume of fluid, that is allowed to enter the surge relief bag is set, is very important in order to ensure a proper functioning of the surge relief bag and in order to avoid that the pressure inside the surge relief bag exceeds any maximum level.

Once the actuator 30 is used, it needs to be reset. Resetting the actuator means that the actuating member 15 needs to be returned to its first position. In order to allow this the actuator 30 can be provided with a further shaft (not shown) which protrudes from the housing 30 on the side opposite to the side with the axis 8. This shaft is used to recharge the actuator 30 and is made to be connectable with an external device such as a gearbox or a ROV operated device so that after each actuation the spring can be recharged. The resetting of the actuator 30 is facilitated by the presence of a non return valve 21 in the piston 13 such that when the actuator 30 is being recharged it avoids pressurizing of the housing 3.

Once the actuator has been reset, the brake disk should be replaced and if need, the surge relief bag could be emptied and/or replaced.

The actuator 30 according to figs. 1 and 2 is adapted to allow the axis 8 to turn 45° from the first to the second position thereof. This means that the actuator 30 is adapted to be connected to an appropriate valve which can be closed when actuated by a quarter turn.

The actuator according to the present invention may have several applications in the offshore field. The primary purpose of the actuator is to be used in remote places such as on an offshore unloading or offloading terminal such as a Single Point Mooring unit (SPM), or on the oil offloading floating line or even subsea to automatically isolate a relief line after a surge event. This allows using a bursting disk as a relief system as an instance, while the controlled closure time allows smooth operation of the isolation valve.

Another possible application of the actuator is to isolate a line where the pressure overcomes a given value. It can be used for any kind of valve, and offer a self contained solution for the controlled closure (non slamming) of the line, avoiding any further pressure rise. The system can be located in a remote place, without any need for electric devices or pressurized vessels.

Another possible application is the possibility to isolate a line by sending a short pressure impulse in the line. Due to its architecture, a short pressure impulse is sufficient to trigger the controlled closure (non slamming) of the actuated valve in a pre set time. The system can be located in a remote place, without any need for electric devices or pressurized vessels, nor hydraulic lines, electric cables, telemetry system to command its closure. The short pressure impulse can be generated by operating a small bypass line.

The symmetric function can be obtained as well, as the system can open a valve in a controlled time, and can do it for a high pressure, or low pressure. The actuator is designed either for land, splash zone or subsea applications. It is enclosed and filled with oil, so that it can be Ex-o certified for ATEX.

Although particular embodiments of the invention have been described and illustrated herein, it is recognized that modifications and variations may readily occur to those skilled in the art, and consequently, it is intended that the claims be interpreted to cover such modifications and equivalents.

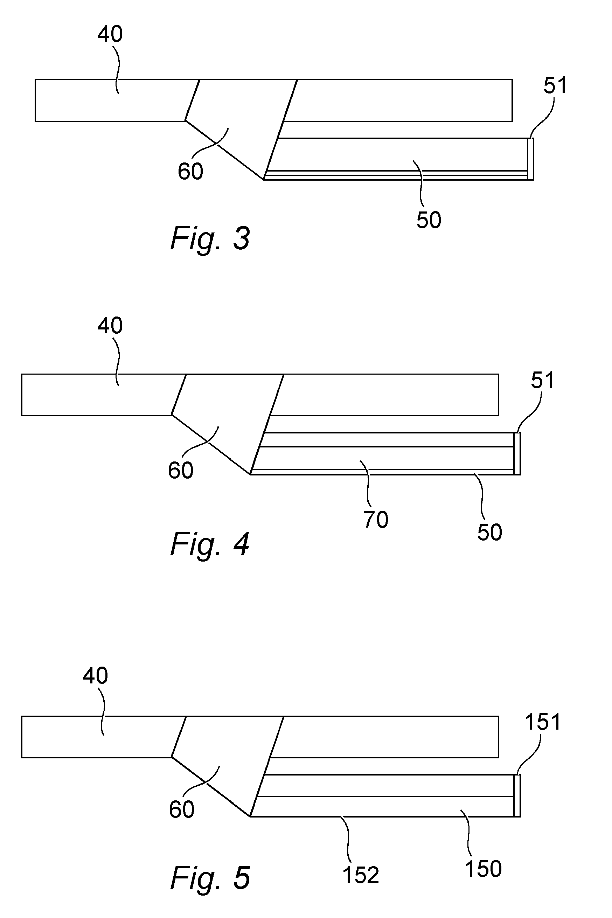

In FIG. 3, a first example for a main fluid line and a surge relief bag is shown. FIG. 3 shows a floating line 40 which is connected to a surge relief bag 50 and which is connected to this surge relief bag by means of a connecting element 60 in a form of a Y-piece. In normal use, fluid will flow through the floating line 40 towards a destination. The access to the surge relief bag 50 will be closed off by the combination of a burst disc and a valve as described above. The activator, according to the invention, the burst disc and the valve activated by the activator will all be contained inside the Y-piece 60.

The surge relief bag 50 is for instance made of standard, floating hoses. The surge relief bag 50 is adapted to be filled with fluid, such as oil, in case of a surge event. The division line is closed at the bottom 51 and this bottom 51 is provided with an air relief valve to allow the displacement of the air initially contained inside the surge relief bag 50. In case of a surge event, the burst disc inside the Y-piece 60 will open and allow fluid to travel towards the surge relief bag 50 and partially fill the surge relief bag 50. Once the activator has operated the valve inside the Y-piece, the access to the surge relief bag will be closed off and offer the fluid to be able to enter the surge relief bag 50.

The advantage of the configuration, according to FIG. 3, is that it allows the SPMs operators to use standard products to contain the surge relief bag 50. The floating hoses are proven to resist to offshore conditions. The main function of the flexible surge relief bag 50 will be to contain the fluid which is entered the surge relief bag 50 and to separate it from the air inside the surge relief bag 50.

The mechanical resistance to the offshore conditions will not be a requirement for the surge relief bag 50. In the same way, the resistance to high pressure will not be needed for the floating hoses. The amount of fluid is being controlled by the use of a burst disc and a valve in combination with an activator 30 according to the present invention. That means that the amount of fluid received inside the surge relief bag 50 will be controlled. That means that after a surge event, the floating surge relief bag 50 will be isolated, and pressurized, and it will be possible to empty the surge relief bag 50 or to toward it away.

In FIG. 4, the configuration according to FIG. 3 is shown wherein the surge relief bag 50 is partially filled with a volume of oil 70 inside the surge relief bag. The surge relief bag 50 can now be emptied or can be towed away in order to process the fluid inside the surge relief bag 50 at a preferred destination.

An alternative configuration of the surge relief bag 50, according to FIG. 3 and 4, is shown in FIG. 5. According to FIG. 5, a floating main fluid line 40 is connected by means of a Y-piece 60 to a surge relief bag 150 which, at its bottom, is closed off by bottom 151. This bottom 151 is provided with an air relief valve in order to let escape the air contained within the empty surge relief bag 150.

The difference between the surge relief bag 50, according to FIG. 3 and 4, and the surge relief bag 150, according to FIG. 5, is the fact that in its empty state, the surge relief bag 150 contains an airbag 152 which is filled with air. In case of a surge event, fluid, such as oil, can enter the surge relief bag 150 and thereby put pressure on the airbag 152 contained inside the surge relief bag 150. The air, originally contained in the airbag 152, can be pushed out via the air relief valve inside the bottom 151 of the surge relief bag 150.

According to the configuration of FIG. 5, a clear separation between the air originally contained in the surge relief bag 150 and any fluid entering the surge relief bag 150 is ensured. No fluid can escape from the inside of the surge relief bag 150 via the air relief valve in the bottom 151 because of the fact that this air relief valve is only connected to the air originally contained in the airbag 152 of the surge relief bag 150.

## Claims

1. An actuator (30) for operating a valve in a fluid line comprising:
- an actuating member (15) with an actuating element (8) for transferring a force to the valve, wherein the actuating member (15) is mounted to move between a first and a second position,
- a spring (10) for storing energy and for moving the actuating member (15) from a dead point to its second position by means of this energy in order to thereby move the actuating element (8),
- lock means (10, 17) for locking the actuating member (15) in its first position,
- release means for releasing the actuating member (15) in order to allow the actuating member (15) to move from the first to the second position, the release means being pressure operated and adapted to be in contact with the fluid line and wherein the release means release the actuating member (15) when the pressure in the fluid line exceeds a threshold, and
- wherein the actuating member (15) is connected to a resistance element (13) for controlling the maximum translation speed of the actuating member (15).

2. An actuator (30) for operating a device according to claim 1, wherein the release means comprise a piston (12) for receiving a fluid pressure on one end of the piston (12) and for transferring said fluid pressure to the actuating member (15).

3. An actuator (30) for operating a device according to claim 1 or 2, wherein the resistance element comprises a piston (13) which is movable in a damper cylinder (7) between a first and a second position.

4. An actuator (30) for operating a device according to any one of the preceding claims, wherein the actuator (30) comprises a housing (3) and wherein the housing (3) is filled with oil.

5. An actuator (30) for operating a device according to any one of the preceding claims, wherein the actuating member (15) is adapted to make a quarter of a turn rotation between its first and its second position.

6. A pressure surge relief system for a liquid transporting pipeline, comprising a surge relief line with a first connection on one end for connecting the surge relief line to the pipeline and a second connection on the opposite end for connecting the surge relief line to a receptacle, the surge relief line being provided with a shot off valve and an actuator for operating the shut off valve, wherein the pressure relief system comprises an actuator (30) according to any of claims 1 to 5.

7. A pipeline provided with a surge relief system according to claim 6.

## Patentansprüche

1. Antrieb (30) zur Betätigung eines Ventils in einer Fluidleitung, umfassend:
- ein Antriebsteil (15) mit einem Antriebselement (8) zur Übertragung einer Kraft auf das Ventil, wobei das Antriebsteil (15) so angebracht ist, dass es sich zwischen einer ersten und einer zweiten Position bewegt,
- eine Feder (10) zur Speicherung von Energie und zur Bewegung des Antriebsteils (15) von einem Totpunkt in seine zweite Position mittels dieser Energie, um dadurch das Antriebselement (8) zu bewegen,
- Arretiermittel (10, 17) zur Arretierung des Antriebsteils (15) in seiner ersten Position,
- Freigabemittel zur Freigabe des Antriebsteils (15), so dass sich das Antriebsteil (15) von der ersten in die zweite Position bewegen kann, wobei die Freigabemittel durch Druck betätigt werden und so ausgelegt sind, dass sie in Kontakt mit der Fluidleitung sind, und wobei die Freigabemittel das Antriebsteil (15) freigeben, wenn der Druck in der Fluidleitung einen Schwellwert überschreitet, und
- wobei das Antriebsteil (15) mit einem Widerstandselement (13) zur Regelung der maximalen Translationsgeschwindigkeit des Antriebsteils (15) verbunden ist.

2. Antrieb (30) zur Betätigung einer Vorrichtung nach Anspruch 1, wobei die Freigabemittel einen Kolben (12) zur Beaufschlagung mit einem Fluiddruck an einem Ende des Kolbens (12) und zur Übertragung des Fluiddrucks auf das Antriebsteil (15) umfassen.

3. Antrieb (30) zur Betätigung einer Vorrichtung nach Anspruch 1 oder 2, wobei das Widerstandselement einen Kolben (13) umfasst, der in einem Dämpfungszylinder (7) zwischen einer ersten und einer zweiten Position beweglich ist.

4. Antrieb (30) zur Betätigung einer Vorrichtung nach einem der vorangehenden Ansprüche, wobei der Antrieb (30) ein Gehäuse (3) umfasst und wobei das Gehäuse (3) mit Öl gefüllt ist.

5. Antrieb (30) zur Betätigung einer Vorrichtung nach einem der vorangehenden Ansprüche, wobei das Antriebsteil (15) so ausgelegt ist, dass es zwischen seiner ersten und seiner zweiten Position eine Viertelumdrehung vollzieht.

6. Druckstoßentlastungssystem für eine Flüssigkeitstransportrohrleitung, umfassend eine Stoßentlastungsleitung mit einem ersten Anschluss an einem Ende zur Verbindung der Stoßentlastungsleitung mit der Rohrleitung und einem zweiten Anschluss am entgegengesetzten Ende zur Verbindung der Stoßentlastungsleitung mit einem Behälter, wobei die Stoßentlastungsleitung mit einem Absperrventil und einem Antrieb zur Betätigung des Absperrventils versehen ist, wobei das Druckentlastungssystem einen Antrieb (30) nach einem der Ansprüche 1 bis 5 umfasst.

7. Rohrleitung, die mit einem Stoßentlastungssystem nach Anspruch 6 versehen ist.

## Revendications

1. Actionneur (30) pour actionner une soupape dans une conduite de fluide, comprenant :
un organe d'actionnement (15) avec un élément d'actionnement (8) pour transférer une force à la soupape, dans lequel l'organe d'actionnement (15) est monté pour se déplacer entre une première et une seconde position,
un ressort (10) pour stocker de l'énergie et pour déplacer l'organe d'actionnement (15) depuis un point mort jusqu'à sa seconde position au moyen de cette énergie afin de déplacer ainsi l'élément d'actionnement (8),
des moyens de verrouillage (10, 17) pour verrouiller l'organe d'actionnement (15) dans sa première position,
des moyens de libération pour libérer l'organe d'actionnement (15) afin de permettre à l'organe d'actionnement (15) de passer de la première à la seconde position, les moyens de libération étant actionnés par pression et adaptés pour être en contact avec la conduite de fluide et dans lequel les moyens de libération libèrent l'organe d'actionnement (15) lorsque la pression dans la conduite de fluide dépasse un seuil, et
dans lequel l'organe d'actionnement (15) est raccordé à un élément de résistance (13) pour commander la vitesse de translation maximum de l'organe d'actionnement (15).

2. Actionneur (30) pour actionner un dispositif selon la revendication 1, dans lequel les moyens de libération comprennent un piston (12) pour recevoir une pression de fluide sur une extrémité du piston (12) et pour transférer ladite pression de fluide à l'organe d'actionnement (15).

3. Actionneur (30) pour actionner un dispositif selon la revendication 1 ou 2, dans lequel l'élément de résistance comprend un piston (13) qui est mobile dans un cylindre d'amortisseur (7) entre une première et une seconde position.

4. Actionneur (30) pour actionner un dispositif selon l'une quelconque des revendications précédentes, dans lequel l'actionneur (30) comprend un boîtier (3) et dans lequel le boîtier (3) est rempli d'huile.

5. Actionneur (30) pour actionner un dispositif selon l'une quelconque des revendications précédentes, dans lequel l'organe d'actionnement (15) est adapté pour faire un quart de tour entre sa première et sa seconde position.

6. Système d'équilibrage de pression pour une canalisation transportant du liquide, comprenant une conduite d'équilibrage de pression avec un premier raccordement à une extrémité pour raccorder la conduite d'équilibrage de pression à la canalisation et un second raccordement à l'extrémité opposée pour raccorder la conduite d'équilibrage de pression à un réceptacle, la conduite d'équilibrage de pression étant prévue avec une soupape d'arrêt et un actionneur pour actionner la soupape d'arrêt, dans lequel le système d'équilibrage de pression comprend un actionneur (30) selon l'une quelconque des revendications 1 à 5.

7. Canalisation prévue avec un système d'équilibrage de pression selon la revendication 6.
